# EUROPEAN PATENT APPLICATION

(11) **EP 4 378 987 A1**
(43) Date of publication of application: **05.06.2024**
(21) Application number: 23212806.6
(22) Date of filing: 28.11.2023
(51) Int. Cl.: C08K 9/12, C08K 13/06, C09D 127/06, H01B 3/44, H01B 7/295, C08L 27/06, C08K 5/12, C08K 3/22

(54) **POLYVINYL CHLORIDE HAVING LOW RELEASE OF SMOKE**

(30) Priority: 29.11.2022 FR 2212485
(71) Applicant: Nexans, 92400 Courbevoie (FR)
(72) Inventor: DESMARS, Loriane, 42320 FARNAY (FR); PARODI, Yann, 1480 TUBIZE (BE); LARCHE, Jean-François, 69250 FLEURIEU (FR); MARTRES, Christophe, 69310 PIERRE-BÉNITE (FR)
(74) Representative: Ipsilon

(57) **Abstract**

The present invention relates to a polymer composition suitable for the production of a layer having flame-retardant properties and having low release of smoke, said composition comprising:
(a) polyvinyl chloride (PVC);
(b) a plasticizer for polyvinyl chloride;
(c) a hydrated inorganic filler; and
(d) a molybdate and/or a stannate deposited on a support.

## Description

The present invention relates to a polyvinyl chloride (PVC) composition suitable for use in an electrical wire or cable, in particular as an insulating layer, sheath or filling material, and which makes possible a significant reduction in the generation of smoke under fire conditions, in comparison with the PVC compositions employed to date in electrical wires or cables.

PVC compositions exhibiting flame-retardant properties have been described in the past, which compositions typically contain a flame-retardant filler of antimony trioxide Sb₂O₃ (often denoted by the acronym "ATO") of which it is known that it acts in synergy with chlorine (resulting from PVC and/or from plasticizers of chlorinated paraffin types, such as MCCP, often employed in combination with ATO) to provide a fire-retardant (non-propagating) effect.

However, PVC compositions of this type exhibit two disadvantages. The first lies in the toxicity of ATO (classified as a CMR category 2 chemical agent) and of chlorinated paraffins (toxic in particular for aquatic environments), which constitutes a first brake on their exploitation, in particular in view of the regulatory requirements in this matter. A second disadvantage is that the effect of non-propagation of fire obtained with ATO, with or without chlorinated paraffins, induces a significant generation of smoke under fire conditions, and the smoke generated is furthermore highly opaque, which significantly reduces the visibility under fire conditions, increasing the risks and compromising the effectiveness of the evacuation of locations invaded by this type of smoke.

To counter this difficulty, additives have been proposed which make possible a reduction in smoke, such as, for example, the molybdate derivatives described in particular in the patent application of US 2021/0371637. The molybdates of this type, in particular ammonium octamolybdate (AOM), are generally quite effective but are expensive.

It is an aim of the present invention to provide PVC compositions which are suitable for use in an electrical cable or wire and which exhibit both very good properties of non-propagation of fire (fire retardant), at least of the same order as those obtained by using ATO, while reducing as much as possible the generation of smoke under fire conditions. For this purpose, there is proposed, according to the present invention, the use of a particular combination of inorganic additives, which make it possible to obtain an effect of non-propagation of fire and a limitation on the generation of smoke and of reduction in their impenetrability, and which additionally exhibit a lower toxicity than ATO and than the mixtures of ATO and of MCCP employed in the state of the art.

The invention makes it possible to provide these effects preferably while maintaining a heat release profile of the same order as that obtained by employing ATO coupled with chlorinated paraffins, such as MCCP.

More precisely, according to a first aspect, a subject-matter of the present invention is a polymer composition comprising:
(a) polyvinyl chloride (PVC);
(b) a plasticizer for polyvinyl chloride;
(c) a hydrated inorganic filler; and
(d) a molybdate deposited on a support and/or a stannate deposited on a support (typically, they are precipitated on a support, generally an inorganic support), and preferably at least one molybdate deposited (for example precipitated) on an inorganic support. Preferably, the plasticized PVC composition of the invention does not comprise ATO.

According to a particular embodiment, the present invention is a polymer composition comprising:
(a) polyvinyl chloride (PVC);
(b) a plasticizer for polyvinyl chloride;
(c) a hydrated inorganic filler; and
(d) a molybdate deposited on a support comprising at least ATH or MDH and/or a stannate deposited on an inorganic support.

According to a particular embodiment, (d) comprises a molybdate deposited on a support comprising at least ATH.

A plasticized PVC composition according to the invention proves to be very particularly effective for forming, in an electrical wire or cable, a fire-retardant layer (providing an effect of non-propagation of fire) surrounding at least one elongated conductive element (of conductive wire or strand of conductive wire type).

Under the conditions of a fire, a composition according to the invention additionally proves to generate a reduced amount of smoke, which makes it possible in particular to reduce the impenetrability of the smoke formed and thus to facilitate fire-fighting operations.

Furthermore, it turns out that the employment of molybdate in a supported form makes possible an effect of a marked reduction in smoke, while reducing the amount of molybdate to be employed and thus the associated costs.

The composition of the invention can in particular be employed to produce an electrically insulating (dielectric) layer around at least one elongated conductive element and/or to produce a protective sheath surrounding an assembly comprising (i) at least one elongated conductive element and (ii) an insulating layer (based or not based on a composition according to the invention) surrounding said elongated conductive element. According to a preferential embodiment, a composition according to the invention is employed to produce a protective sheath of this type.

According to another possible embodiment, a composition according to the invention can be employed for the manufacture of a filling layer around conductive elements which are themselves covered by an insulating layer (based or not based on a composition according to the invention) and which are surrounded by a protective sheath (based or not based on a composition according to the invention). If appropriate, the filling layer is located in the internal space of the protective sheath, around the insulated conductive elements (in other words, between the insulating layer and the protective sheath).

According to another aspect, a subject-matter of the present invention is electrical wires and cables which comprise a protective layer or sheath as described above.

When the composition of the invention is employed to produce a protective sheath, this sheath is preferably an external sheath of the cable, namely preferably the outermost layer of said cable. The cable then does not comprise other layer(s) surrounding said sheath.

A protective sheath prepared from a plasticized PVC composition according to the invention is generally non-crosslinked, which simplifies its processing (processability) and allows it to be recycled (reprocessability).

The invention applies in particular to electrical wires and cables intended for the transportation of power, in particular to low-voltage (in particular a voltage of less than 6 kV) or medium-voltage (in particular a voltage ranging from 6 to 45-60 kV) power wires and cables, whether direct or alternating current, and particularly to low-voltage power cables.

The plasticized PVC compositions according to the invention are in particular well suited for the forming of non-fire-propagating protective sheaths around low-voltage power cables, and very particularly for cables intended to be employed in the field of buildings, for example in hospitals, train stations, individual homes or yet again in computer data centres or electric charging stations.

Different characteristics of the invention and advantageous embodiments of it are described in more detail below.

### The polyvinyl chloride (PVC)

The PVC present as component (a) in a composition according to the invention can vary to a fairly large extent.

However, preferably, it is a non-chlorinated PVC, namely a PVC with a chlorine content which is less than 60% and typically substantially of the order of 57%.

Furthermore, the PVC used according to the present invention preferably exhibits a K-value between 65 and 75.

The "K-value" of a given PVC is a value determined from the viscosity index of said PVC, this viscosity index being measured under the conditions of Standard ISO R 174 at 25°C and at a concentration of 0.5 g of PVC in 100 ml of cyclohexanone.

The viscosity index measured under these specific conditions corresponds to a K-value, given according to Standard DIN 53726, which corresponds to the K-value to which reference is made here.

Whatever the exact nature of the PVC employed, the PVC composition of the invention is specifically a plasticized PVC composition, which comprises a sufficient amount of a compound (b) which is a plasticizer for PVC. This compound (b) is advantageously a non-halogenated plasticizer.

The compound (b) of the composition can thus be, for example:
- a compound chosen from phthalates, for example an orthophthalate, such as diisodecyl orthophthalate DIDP, or else a terephthalate, such as dioctyl terephthalate DOTP; or
- a compound chosen from trimellitates, adipates and sebacates; or
- a mixture of these compounds.

Whatever the nature of the plasticizer (b) employed, it is advantageously present in the composition at a content of 40 to 60 parts by weight per 100 parts by weight of PVC.

According to one embodiment which can be envisaged, the plasticized PVC composition of the invention can optionally additionally comprise at least one polymer other than PVC. If appropriate, this other polymer is preferably chosen from nitrile-based rubbers, polyesters, chlorinated PVCs (having a chlorine content of greater than 60%), chlorinated rubbers of CPE type, and their mixtures.

When the plasticized PVC composition of the invention comprises a polymer other than PVC or several polymers other than PVC, the total amount of polymers other than PVC in the composition is generally less than 50 parts by weight and preferably less than 30 parts, indeed even than 10 parts, by weight per 100 parts by weight of PVC. In other words, the polymer composition according to the invention preferably comprises more than 50% by weight of PVC, advantageously more than 70% by weight of PVC and more advantageously still at least 90% by weight of PVC, with respect to the total weight of the polymers present in the composition. According to an advantageous embodiment, the composition comprises more than 95% of PVC and typically more than 98% of PVC, with respect to the total weight of the polymers present in the composition.

### The compounds (c) and (d)

The hydrated inorganic filler (c) and the supported molybdate and/or stannate (d) present in the composition of the invention constitute a particular mixture of additives which proves suitable for providing a fire-retardant effect (namely a non-fire-propagating effect) while limiting the production of smoke.

The invention makes it possible to limit the production of smoke, which makes possible the manufacture of class s2 cables according to the European Union regulation for construction products CPR.

The hydrated inorganic filler (c) is generally a filler present in the dispersed state in the polymer composition. It is typically a ground powder. Furthermore, the inorganic filler (c) is generally uncoated and non-encapsulated.

In general, the inorganic filler (c) comprises or consists of at least one hydrated inorganic compound chosen from aluminium hydroxide (ATH), magnesium hydroxide (MDH), hydromagnesite, huntite and their mixtures, typically reduced to a powder, in particular by grinding.

According to a particularly advantageous embodiment, the organic filler (c) comprises (and preferably consists only of) crushed ATH.

Whatever the nature of the inorganic filler (c), it is advantageously present in the composition at a content of 40 to 150 parts by weight, for example between 50 and 100 parts by weight, per 100 parts by weight of PVC.

The compound (d) is for its part a molybdate and/or a stannate deposited on a support, typically an inorganic support. The molybdate and/or the stannate can, for example, be precipitated on an inorganic support.

This inorganic support can typically be a hydrated inorganic filler of the same type as the inorganic filler (c). In this case, it should be noted that, within the meaning of the present description, the inorganic support on which the molybdate or the stannate is supported is regarded as forming part of the compound (d) and not of the inorganic filler (c), which for its part does not support molybdate or stannate.

The inorganic support present in the compound (d) can, for example, be ATH, MDH or else chalk, talc or one of their mixtures.

According to one embodiment, the support present in the compound (d) comprises at least ATH or at least MDH.

According to an advantage embodiment, the compound (d) comprises a molybdate on a support comprising at least ATH. In one embodiment, ATH forms the support with at least one another inorganic support like in particular talc. In another embodiment, the support consists of ATH.

Advantageously, the inorganic support contained in the compound (d) comprises (and preferably consists only of) a hydrated inorganic filler identical to that which constitutes the inorganic filler (c). According to this embodiment, the compounds (c) and (d) can be described as one and the same hydrated inorganic filler, part of which (corresponding to the compound (d)) is covered at the surface by a molybdate or a stannate and the other part of which (corresponding to the compound (c)) is not covered with molybdate or with stannate.

According to an advantageous alternative form, the compounds (c) and (d) can advantageously both comprise ATH. In this case, the compound (c) advantageously consists only of crushed ATH and the compound (d) comprises a molybdate and/or stannate on a support comprising ATH.

Whatever the nature of the compound (d), its content in the composition of the invention preferably ranges from 1 to 20 parts by weight, for example from 2 to 15 parts by weight, per 100 parts by weight of PVC.

### Other optional additives

The composition of the present invention can optionally comprise compounds other than the abovementioned compounds (a) to (d).

As indicated, it is preferable for the composition of the present invention not to comprise ATO and more generally it is advantageous for it not to comprise toxic compounds.

The composition may, however, comprise additives chosen, for example, from processing aids, such as lubricants or compatibilizing agents; antioxidants; UV stabilizers; pigments; or one of their mixtures.

The composition of the invention typically comprises less than 10 parts by weight of such additives, generally less than 5 parts by weight (for example between 0.01 and 5 parts by weight), per 100 parts by weight of PVC.

It should be noted that the composition of the present invention can optionally contain fillers other than the compounds (c) and (d), for example chalk (calcium carbonate). If appropriate, this optional additional filler is generally present in a proportion of less than 40 parts by weight (for example 30 parts by weight or less), per 100 parts by weight of PVC.

According to a particularly advantageous embodiment, the plasticized PVC composition of the invention comprises, per 100 parts by weight of PVC:
40 to 60 parts by weight of plasticizer (b); 50 to 100 parts by weight of inorganic filler (c); optionally up to 30 parts by weight of chalk; 2 to 15 parts by weight of the compound (d); and at most 10 parts by weight of additives.

### Layers and sheaths obtained from a composition according to the invention

A composition according to the invention can be easily applied, for example by extrusion, around an elongated conductive element, or else around an assembly of elongated conductors or else again to form a sheath around an assembly comprising at least one elongated conductive element covered by an insulating layer.

A layer or sheath obtained by such an application of a composition of the invention, in particular by extrusion, typically has a thickness ranging from 0.1 to 5 mm approximately and particularly preferably ranging from 0.7 to 2.5 mm.

The examples below illustrate the present invention.

### Examples

A plasticized PVC composition according to the invention (composition C1) was prepared by mixing the compounds described in Table 1 below, in the proportions indicated, which are in parts by weight per 100 parts by weight of PVC.

For comparison, a reference composition (Reference) comprising a flame-retardant system based on ATO and on MCCP chlorinated paraffins was prepared under the same conditions.

**Table 1: Formulation of the compositions tested**

| **Composition** | **Reference** | **C1** |
|---|---|---|
| **PVC (K-value 70)** | 100 | 100 |
| **Phthalate plasticizer (DIDP)** | 40 | 46 |
| **Chlorinated paraffin (MCCP)** | 16 | |
| **ATO** | 4 | |
| **Crushed calcium carbonate** | 55 | 30 |
| **Crushed MDH** | 30 | |
| **Crushed ATH** | | 55 |
| **Kemgard^{®} 605** | | 15 |
| **Ca/Zn stabilizer** | 5 | 5 |

The commercial product Kemgard^{®} 605 employed in the composition C1 is a compound (d) according to the invention, which comprises zinc molybdate on an ATH-based inorganic support.

Samples in the form of square plaques measuring 10 cm x 10 cm and with a thickness of 3 mm were pressed starting from these PVC compositions in order to undergo the following tests.

### Test I: Limiting Oxygen Index (LOI)

Expressed as percentage of oxygen, the LOI corresponds to the minimum concentration of oxygen in an oxygen/nitrogen mixture which makes it possible to maintain the combustion of the plaque. This index was measured here under the conditions of Standard NF EN ISO 4589-2.

### Test II: Flame performance qualities determined according to Standard EN 50399 using a cone calorimeter (50 kW/m²):

THR: total heat release
pHRR: peak heat release rate
Average EHC: average effective heat of combustion as defined in Standard ISO 5660, Part 1
TSR: total smoke release
Average SEA: average specific extinction area (per unit of loss of weight of the test specimen) as defined in Standard ISO 5660, Part 1

The results obtained are given in Table 2 below.

**Table 2: Performance qualities of the compositions**

| **Composition** | **Reference** | **C1** |
|---|---|---|
| **LOI** | | |
| **%O₂** | 34.2 | 28.4 |
| **Cone calorimeter (50 kW/m²)** | | |
| **THR (MJ/m²)** | 54.6 | 58 |
| **pHRR (kW/m²)** | 250 | 225 |
| **Average EHC (MJ/kg)** | 17.2 | 17.4 |
| **TSR (m²/m²)** | 1659 | 1164 |
| **Average SEA (m²/kg)** | 519 | 347 |

It emerges from these results that the composition C1 according to the invention induces a significant reduction in the production of smoke (SEA and TSR) compared to the reference formulation.

This effect of reduction in smoke is obtained without substantially affecting the performance qualities regarding the fire-retardant effect measured with the cone calorimeter, which is similar to that obtained with the reference formulation (close THR, EHC and pHRR values).

## Claims

1. Polymer composition comprising:
(a) polyvinyl chloride (PVC);
(b) a plasticizer for polyvinyl chloride;
(c) a hydrated inorganic filler; and
(d) a molybdate deposited on a support comprising at least ATH or MDH and/or a stannate deposited on a support.

2. Polymer composition according to Claim 1, where the plasticizer is a non-halogenated plasticizer, preferably chosen from phthalates.

3. Polymer composition according to Claim 1 or 2, where the content of plasticizer (b) is of between 40 and 60 parts by weight per 100 parts by weight of PVC.

4. Polymer composition according to one of Claims 1 to 3, where the hydrated inorganic filler (c) comprises or consists of at least one hydrated inorganic compound chosen from aluminium hydroxide (ATH), magnesium hydroxide (MDH), hydromagnesite, huntite and their mixtures.

5. Polymer composition according to one of Claims 1 to 4, where the content of hydrated inorganic filler (c) is of between 40 and 150 parts by weight per 100 parts by weight of PVC.

6. Polymer composition according to one of Claims 1 to 5, where the compound (d) comprises a molybdate deposited on a support comprising at least ATH and/or a stannate deposited on an inorganic support.

7. Polymer composition according to one of Claims 1 to 5, where the content of compound (d) ranges from 1 to 20 parts by weight per 100 parts by weight of PVC.

8. Polymer composition according to Claim 6, where the compound (d) comprises a molybdate supported on ATH.

9. Polymer composition according to Claim 6, where the inorganic support contained in the compound (d) is a hydrated inorganic filler identical to that which constitutes the inorganic filler (c).

10. Electrical wire or cable comprising a layer surrounding at least one elongated conductive element, obtained from a composition according to one of Claims 1 to 8, where said layer is preferably:
- an electrically insulating layer around at least one elongated conductive element; and/or
- a filling layer around conductive elements which are themselves covered by an insulating layer and which are surrounded by a protective sheath; and/or
- a protective sheath surrounding an assembly comprising (i) at least one elongated conductive element and (ii) an insulating layer (based or not based on a composition according to the invention) surrounding said elongated conductive element.
